# EUROPEAN PATENT SPECIFICATION

(11) **EP 1 471 707 B1**
(45) Date of publication and mention of the grant of the patent: **24.01.2007**
(21) Application number: 04009126.6
(22) Date of filing: 16.04.2004
(51) Int. Cl.: H04L 29/06, H04L 12/56

(54) **Data reception and playback apparatus, method, processing program**
Vorrichtung, Verfahren und Verarbeitungsprogramm zum Empfangen und Wiedergeben von Daten
Dispositif, méthode et logiciel de réception et lecture de données

(30) Priority: 21.04.2003 JP 2003115939; 24.02.2004 JP 2004048326
(43) Date of publication of application: 27.10.2004
(73) Proprietor: MATSUSHITA ELECTRIC INDUSTRIAL CO., LTD., Kadoma-shi, Osaka 571-8501 (JP)
(72) Inventor: Sugiura, Masataka, Tokyo 158-0082 (JP); Suzuki, Mitsuhiro, Yokohama-shi, Kanagawa 241-0822 (JP)
(74) Representative: Grünecker, Kinkeldey, Stockmair & Schwanhäusser Anwaltssozietät

(56) References cited:
- US-A1- 2003 067 872
- CHUANG L ET AL: "Dynamic partial buffer sharing scheme: Proportional packet loss rate" COMMUNICATION TECHNOLOGY PROCEEDINGS, 2003. ICCT 2003. INTERNATIONAL CONFERENCE ON APRIL 9 - 11, 2003, PISCATAWAY, NJ, USA,IEEE, vol. 1, 9 April 2003 (2003-04-09), pages 259-262, XP010643586 ISBN: 7-5635-0686-1
- REJAIE R ET AL: "Architectural considerations for playback of quality adaptive video over the Internet" IEEE INTERNATIONAL CONFERENCE ON NETWORKS. ICON. PROCEEDINGS OF ICON, XX, XX, 5 September 2000 (2000-09-05), pages 204-209, XP002177090
- MEI-LING SHUY, SHU-CHING CHEN, HONGLI LUO: "End-to-End Congestion Control via Optimal Bandwidth Allocation for Multimedia Streams" PROCEEDINGS OF THE 15TH INTERNATIONAL CONFERENCE ON COMPUTER APPLICATIONS IN INDUSTRY AND ENGINEERING, [Online] 7 November 2002 (2002-11-07), pages 57-60, XP002323028 SAN DIEGO, CALIFORNIA USA Retrieved from the Internet: URL:http://www.cs.fiu.edu/~chens/PDF/CAINE 02.pdf>

## Description

### BACKGROUND OF THE INVENTION

### 1. Field of the Invention

The present invention relates to a data reception and playback apparatus and data reception and playback method, and more particularly to a data reception and playback apparatus, data reception and playback method, and data reception and playback processing program whereby compression-coded audio data or video data stored in a server in a network is requested, and data transmitted in accordance with that request is received and played back.

### 2. Description of the Related Art

Heretofore, services have been started that distribute multimedia content to personal computer terminals via the Internet, and play back multimedia content on personal computer terminals. Furthermore, the communication band is also expanding in mobile terminals, and particularly third-generation mobile phones, and the proliferation of multimedia distribution services using radio communication networks is expected.

In general, multimedia distribution services can be broadly classified into download type and streaming type services. With the download type, playback is started by a terminal after reception of all multimedia content data by the terminal is completed, whereas with the streaming type, playback is performed concurrently while multimedia content is being received by a terminal.

As a multimedia content representation method, there is a method whereby continuous playback of a plurality of multimedia data is represented by means of a scenario (or script) for specifying the playback order of a plurality of media.

A typical example of this scenario description is SMIL (Synchronized Multimedia Integrated Language) standardized by W3C. When a scenario is specified and a plurality of moving image/audio data are distributed, with the download method that downloads all the data beforehand there is a long waiting period before playback starts, and therefore a distribution service that uses the streaming method, in which playback is performed while data is being received, is more suitable.

In order to perform playback in accordance with a scenario, it is necessary to pre-acquire (pre-read) the data to be played back next while playing back certain data. A proposal concerning processing that pre-acquires data to be played back next is given, for example, in Unexamined Japanese Patent Publication No.10-257471 (see FIG.4 and FIG.5 in particular).

In the case of this processing, if, according to a script (playback scenario) that specifies the playback order, while certain video data is being played back the video data to be played back next is data on a different server, video data is acquired beforehand (pre-read) and stored in the terminal, and when the time comes for playback of the next video data, playback of the stored video data is started, thereby providing concurrent playback processing and pre-read processing.

However, in conventional processing that acquires in advance data to be played back, it is presupposed that the band of the network in which video data is played back is sufficiently broad and stable, and therefore in a network environment in which band stability is not guaranteed, such as the Internet, or a network environment in which band fluctuations are large, as in radio communications, there is a problem of not being able to provide a stable data playback environment.

That is to say, when conventional concurrency of playback processing and pre-read processing is applied to a network environment with large band fluctuations, the band for receiving data being played back is constrained, and there is a possibility of a significant decline in the playback quality of data being played back.

Client side detection of congestion in a best-effort packet network comprising streaming media traffic as been previously described, wherein a client media buffer can detect multiple levels of network congestion and initiate multiple levels of error handling (e.g. United States Patent Application No. 2003/067872 A1).

### SUMMARY OF THE INVENTION

It is an object of the present invention to provide a data reception and playback apparatus according to claim 1, data reception and playback method according to claim 19 and data reception and playback processing program according to claim 20, whereby it is possible to perform to the fullest extent possible reception of data to be played back next without degrading the playback quality of data being played back, and play back a plurality of data seamlessly.

### BRIEF DESCRIPTION OF THE DRAWINGS

The above and other objects and features of the invention will appear more fully hereinafter from a consideration of the following description taken in conjunction with the accompanying drawing wherein one example is illustrated by way of example, in which:
FIG.1 is a block diagram showing the main configuration of a mobile phone apparatus according to one embodiment of the present invention;
FIG.2 is a flowchart for explaining the operation of a mobile phone apparatus according to this embodiment;
FIG.3A is a drawing showing schematically the situation when AV1 data and AV2 data are played back consecutively;
FIG.3B is a drawing schematically showing the playback state of AV1 data at the "present moment";
FIG.4 is a drawing showing a state in which storage of AV2 data into an AV2 data receive buffer is started according to this embodiment;
FIG.5 is a drawing showing a state in which AV1 data receive buffer decrease speed observation processing is executed according to this embodiment;
FIG. 6 is a drawing showing a state in which the next AV2 data pre-read amount is determined according to this embodiment;
FIG.7 is a drawing showing a state in which AV2 data small-amount pre-read processing is executed repeatedly according to this embodiment; and
FIG.8 is a drawing showing the data distribution band in a WCDMA environment to which pre-read schedule control processing according to this embodiment is applied.

### DESCRIPTION OF THE PREFERRED EMBODIMENT

With reference now to the accompanying drawings, an embodiment of the present invention will be explained in detail below.

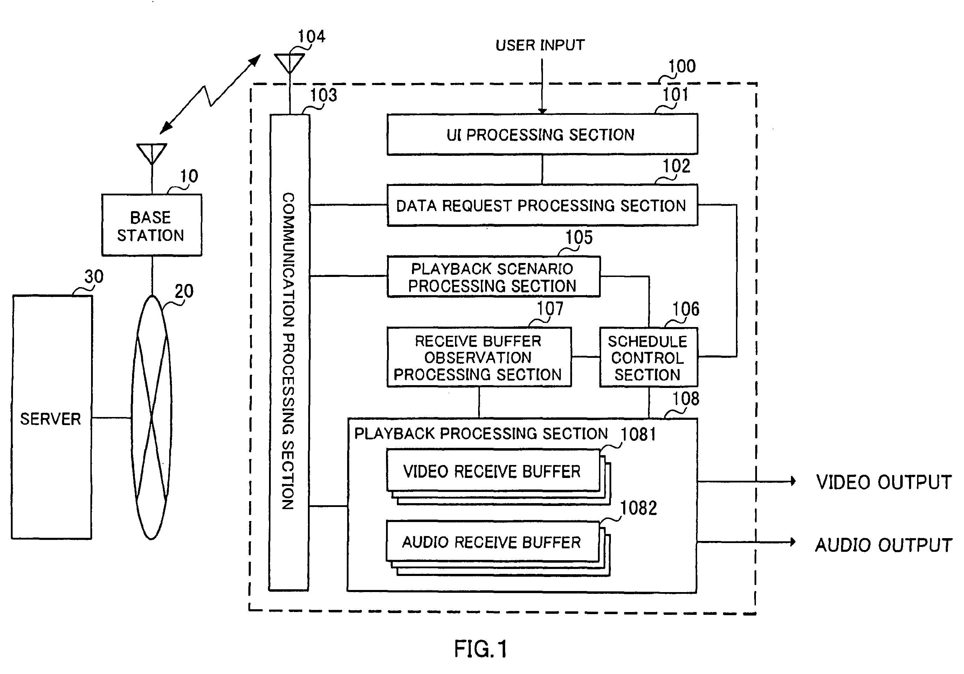

FIG.1 is a block diagram showing the main configuration of a mobile phone apparatus according to one embodiment of the present invention.

Mobile phone apparatus 100 chiefly comprises a user interface processing section (UI processing section) 101, data request processing section 102, communication processing section 103, antenna 104, playback scenario processing section 105, schedule control section 106, receive buffer observation processing section 107, and playback processing section 108.

In FIG.1, mobile phone apparatus 100 receives multimedia data from a server 30 via a base station 10 and network 20 by means of radio communication.

Based on a GUI (graphical user interface) screen displayed on a display section (not shown), UI processing section 101 receives an input event (multimedia data playback instruction) input from an input section (not shown), and outputs a scenario processing request command corresponding to that input event to data request processing section 102.

Data request processing section 102 converts the scenario processing request command input from UI processing section 101 to a scenario request signal for server 30 and outputs this scenario request signal to communication processing section 103, and also converts a data acquisition request command input from schedule control section 106 described later herein to a data request for server 30 and outputs this data request to communication processing section 103.

Communication processing section 103 performs radio transmission of the scenario request signal and data request signal input from data request processing section 102 to base station 10 via antenna 104 in accordance with a mobile phone compatible communication protocol, thereby causing the scenario request signal and data request signal to be transmitted from base station 10 to server 30 via network 20.

Communication processing section 103 also receives playback scenario data transmitted as a radio signal from server 30 via network 20 and base station 10, and outputs this playback scenario data to playback scenario processing section 105, and receives media data transmitted as a radio signal from server 30 via network 20 and base station 10, and outputs this media data to playback processing section 108.

Playback scenario processing section 105 analyzes the playback scenario data (for example, an SMIL file) input from communication processing section 103, converts it to playback scenario internal data (for example, a structure table), and outputs this data to schedule control section 106.

In accordance with the playback scenario (internal data) input from playback scenario processing section 105, schedule control section 106 outputs a data acquisition request command to data request processing section 102 and also outputs a playback start command to playback processing section 108.

Schedule control section 106 also determines the pre-read schedule (pre-read amount and pre-read time interval) of the media data to be played back next, based on the playback scenario input from playback scenario processing section 105 and a receive buffer decrease speed input from receive buffer observation processing section 107, and outputs a data acquisition request command to data request processing section 102 in accordance with this pre-read schedule.

Schedule control section 106 also outputs a buffer observation request command to receive buffer observation processing section 107 at a predetermined interval shorter than the pre-read schedule, and receives the receive buffer decrease speed from receive buffer observation processing section 107.

In response to a buffer observation request command input from schedule control section 106, receive buffer observation processing section 107 observes the amount of unprocessed (not played-back) data stored in a video receive buffer 1081 and audio receive buffer 1082 inside playback processing section 108, calculates the speed of decrease of the amount of unprocessed data decreased by the data playback processing, and outputs this to schedule control section 106 as the receive buffer decrease speed.

Playback processing section 108 incorporates video receive buffer 1081 and audio receive buffer 1082 in order to store received media data divided into video data and audio data.

Playback processing section 108 divides receive media data input from communication processing section 103 into video data and audio data which it stores temporarily in video receive buffer 1081 and audio receive buffer 1082, performs decoding from the first data stored in accordance with a playback start command input from schedule control section 106, and outputs (plays back) video data and audio data.

Playback processing section 108 also uses memory areas within video receive buffer 1081 and audio receive buffer 1082 as a playback receive buffer and pre-read receive buffer.

That is to say, playback processing section 108 uses a memory area that stores received media data as a playback receive buffer, then when playback of this stored data ends, switches this playback receive buffer to the pre-read receive buffer for the data to be played back next, and when the time is reached for playback of the media data stored in the memory area used as a pre-read receive buffer, switches this pre-read receive buffer to the playback receive buffer.

Server 30 in FIG. 1 stores a plurality of multimedia data for streaming distribution and a plurality of playback scenario data corresponding to the respective multimedia data with correspondence indicated, receives a data request signal from mobile phone apparatus 100 via base station 10 and network 20, reads playback scenario data and multimedia data corresponding to that data request signal, and distributes these data to mobile phone apparatus 100 via base station 10 and network 20.

Next, an explanation will be given of the various set values (decrease speed threshold value, pre-read amount, pre-read interval, pre-read start time, pre-read start amount, etc.) constituting criteria when a pre-read schedule is decided by schedule control section 106.

Here, the decrease speed threshold value is a value used to determine whether or not a playback receive buffer allowing playback processing to be continued normally for media data being played back up to the time of the end of its playback can be secured in video receive buffer 1081 and audio receive buffer 1082. In this embodiment, the upper limit of the receive buffer decrease speed is used as the threshold value.

The pre-read amount is a value indicating the amount of data when part of the media data to be played back next is acquired in advance from server 30. In this embodiment, the pre-read amount is changed dynamically according to the pre-read schedule.

The pre-read interval is a value indicating the acquisition time interval when part of the media data to be played back next is acquired in advance from server 30. In this embodiment, the pre-read interval is changed dynamically according to the pre-read schedule.

The pre-read start time (initial pre-read time) and pre-read start amount (initial pre-read amount) are values decided in order to store a sufficient amount of data for the start of playback by the playback start time of the media data to be played back next. In this embodiment, the pre-read start time and pre-read start amount are changed dynamically according to the pre-read schedule.

The pre-read amount and pre-read interval from the second time onward are values decided so that the media data being played back can continue to be played back normally even if the pre-read amount and pre-read interval decided at the time of the initial pre-read are continued. In this embodiment, the pre-read amount and pre-read interval from the second time onward are changed dynamically according to the pre-read schedule.

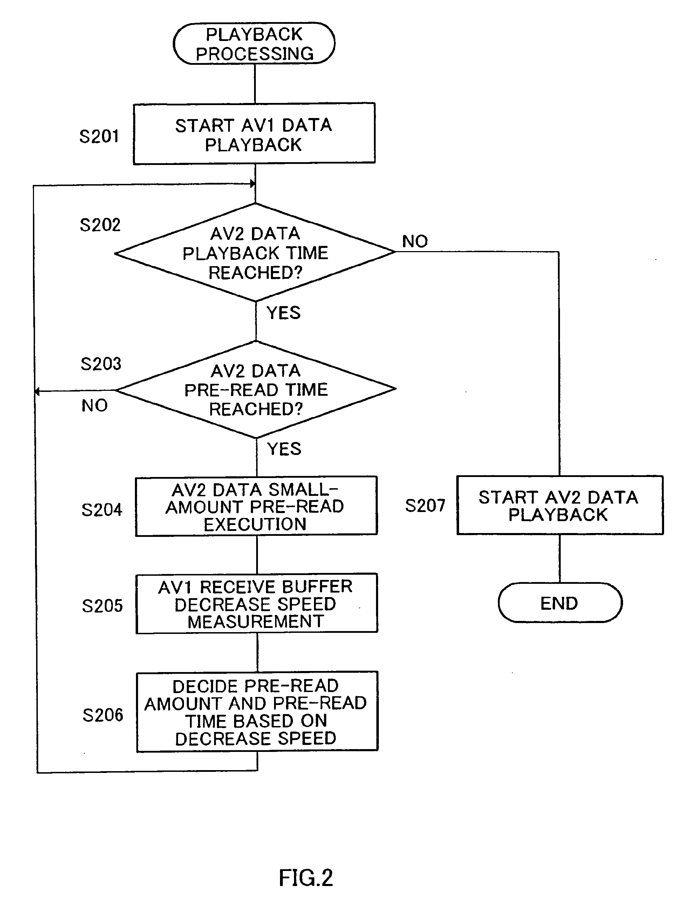

The operation of mobile phone apparatus 100 with the above-described configuration will now be described using the block diagram in FIG.1 and the flowchart in FIG.2.

In mobile phone apparatus 100, when an input event is input to UI processing section 101, a scenario processing request command corresponding to that input event is output to data request processing section 102.

In data request processing section 102, the scenario processing request command input from UI processing section 101 is converted to a data request signal for server 30, and this data request signal is output to communication processing section 103.

In communication processing section 103, the data request signal input from data request processing section 102 is transmitted as a radio signal from antenna 104 to base station 10 in accordance with a mobile phone compatible communication protocol, whereby the data request signal is transmitted from base station 10 to server 30 via network 20.

In server 30, when the data request signal is received from mobile phone apparatus 100 via base station 10 and network 20, multimedia data corresponding to that data request signal and playback scenario data for playing back that multimedia data are read and transmitted to base station 10 via network 20.

In base station 10, multimedia data and playback scenario data received from server 30 via network 20 are transmitted to mobile phone apparatus 100 by means of radio communication in accordance with a mobile phone compatible communication protocol.

Then, in communication processing section 103 of mobile phone apparatus 100, when the multimedia data and playback scenario data transmitted as radio signals from server 30 via network 20 and base station 10 are received, the multimedia data is output to playback processing section 108 and the playback scenario data is output to playback scenario processing section 105.

In playback scenario processing section 105, the playback scenario data (for example, SMIL file) input from communication processing section 103 is analyzed and converted to playback scenario internal data (for example, a structure table), which is output to schedule control section 106.

In schedule control section 106, in accordance with the playback scenario (internal data) input fromplayback scenario processing section 105, a data acquisition request command is output to data request processing section 102 and a playback start command is output to playback processing section 108.

In playback processing section 108, video data and audio data contained in the multimedia data input from communication processing section 103 are stored respectively in video receive buffer 1081 and audio receive buffer 1082.

At this time, in playback processing section 108, it is assumed that AV1 data is received as multimedia data to be played back first, and video data and audio data contained in this AV1 data are stored respectively in playback receive buffers set in video receive buffer 1081 and audio receive buffer 1082 respectively.

Then, in playback processing section 108, playback processing of the video data and audio data contained in the AV1 data stored in the playback receive buffers in video receive buffer 1081 and audio receive buffer 1082 is started in accordance with the playback start command input from schedule control section 106.

The multimedia data to be played back next after playback of this AV1 data is AV2 data, and a schedule for executing pre-read processing of this AV2 data is decided based on the aforementioned various set values (decrease speed threshold value, pre-read amount, pre-read interval, pre-read start time, pre-read start amount, etc.) in above-described schedule control section 106.

Processing from the start of playback processing in playback processing section 108 onward and pre-read schedule decision processing in schedule control section 106 will now be described with reference to the flowchart shown in FIG.2. The flowchart shown in FIG.2 is stored in a storage apparatus (such as ROM, for example) (not shown) as a control program, and is executed by a CPU (not shown).

First, in step S201, playback processing section 108 starts playback processing of video data and audio data contained in the AV1 data stored in the playback receive buffers in video receive buffer 1081 and audio receive buffer 1082 in accordance with a playback start command input from schedule control section 106.

Then, in step S202, schedule control section 106 determines whether or not the playback time for the AV2 data to be played back next has been reached. In this case, it is the time at which AV1 data playback is started, and the AV2 data playback time has not been reached (step S202: NO), and therefore the processing flow proceeds to step S203, and it is determined whether the AV2 data pre-read time has been reached.

If the result of this determination is that the AV2 data pre-read time has not been reached (step S203: NO) the processing flow returns to step S201, and if the result of this determination is that the AV2 data pre-read time has been reached (step S203: YES) the processing flow proceeds to step 5204. In step S204, data request processing section 102 converts an AV2 data acquisition request command input from schedule control section 106 based on the pre-read schedule to a data request signal, outputs this data request signal to communication processing section 103, and executes AV2 data small-amount pre-read processing for server 30.

Next, in step S205, schedule control section 106 outputs a buffer observation request command to receive buffer observation processing section 107. Receive buffer observation processing section 107 observes the amount of unprocessed (not played-back) data stored in each playback receive buffer in use in AV1 data playback in video receive buffer 1081 and audio receive buffer 1082 inside playback processing section 108 in accordance with the input buffer observation request command, calculates the speed of decrease of the amount of unprocessed data decreased by the data playback processing, and outputs this to schedule control section 106 as the receive buffer decrease speed.

Then, in step S206, based on the receive buffer decrease speed input from receive buffer observation processing section 107, schedule control section 106 decides the next AV2 data pre-read schedule (next pre-read amount and next pre-read time interval), returns to step S202, and repeats execution of the processing of step S202 through step S206.

At this time, if the result of the determination in step S202 is that the AV2 data playback time has been reached (step S202: YES) the processing flow proceeds to AV2 data playback processing in step S207.

The method of deciding the pre-read schedule executed in schedule control section 106 will now be explained.

First, of the aforementioned various set values constituting criteria when deciding the pre-read schedule, the receive buffer decrease speed threshold value is set, and is compared with the receive buffer decrease speed input from receive buffer observation processing section 107, and the pre-read schedule (pre-read amount, pre-read interval) is determined by means of a pattern such as pattern A or B below, for example.

### (Pattern A)

- If the receive buffer decrease speed is 0 or less, the pre-read amount is increased by a predetermined amount, and the pre-read interval is decreased by a predetermined amount.
- If the receive buffer decrease speed is less than or equal to the threshold value (or less than the threshold value), the same pre-read amount and pre-read interval are used.
- If the receive buffer decrease speed exceeds the threshold value (or is greater than or equal to the threshold value), the pre-read amount is decreased by a predetermined amount, and the pre-read interval is increased by a predetermined amount.

### (Pattern B)

- If the receive buffer decrease speed is 0 or less, the same pre-read amount and pre-read interval are used.
- If the receive buffer decrease speed is less than or equal to the threshold value (or less than the threshold value), the pre-read amount is decreased by a predetermined amount, and the pre-read interval is increased by a predetermined amount.
- If the receive buffer decrease speed exceeds the threshold value (or is greater than or equal to the threshold value), pre-reading is halted.

The receive buffer decrease speed being 0 means a state in which the AV1 data buffer storage amount is being held constant, the receive buffer decrease speed being less than 0 (negative) means a state in which the AV1 data buffer storage amount is increasing, the receive buffer decrease speed being greater than or equal to a predetermined amount (or greater than a predetermined amount) means a state in which the AV1 data buffer storage amount is decreasing sharply, and the receive buffer decrease speed being less than or equal to a predetermined amount (or less than a predetermined amount) means a state in which the AV1 data buffer storage amount is decreasing gently. However, if, duringplayback, the amount of space in the receive buffer falls to or below the minimum necessary for playback, pre-reading is halted. The predetermined amount of increment or difference of the pre-read amount depends on the network environment (band), and therefore an optimal value must be found empirically.

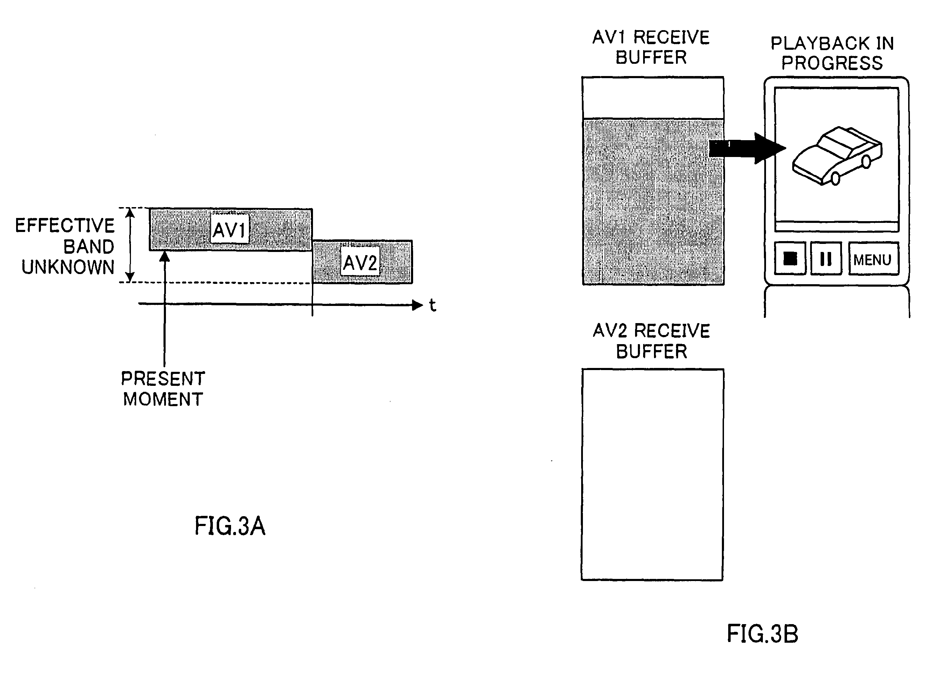

An actual example of the above AV2 data pre-read processing during AV1 data playback will now be described with reference to FIG.3 through FIG.7.

FIG.3A is a drawing showing schematically the situation when AV1 data and AV2 data are played back consecutively in a network environment in which the effective band is unknown. The AV1 data playback state at the time indicated by "present moment" in this figure is shown in FIG.3B.

FIG.3B shows a state in which AV1 data is stored in the AV1 data receive buffer, its playback is proceeding, and AV2 data is not stored in the AV2 data receive buffer.

That is to say, the state shown in FIG. 3B corresponds to the case where step S201 processing is executed in the flowchart in FIG.2 described above.

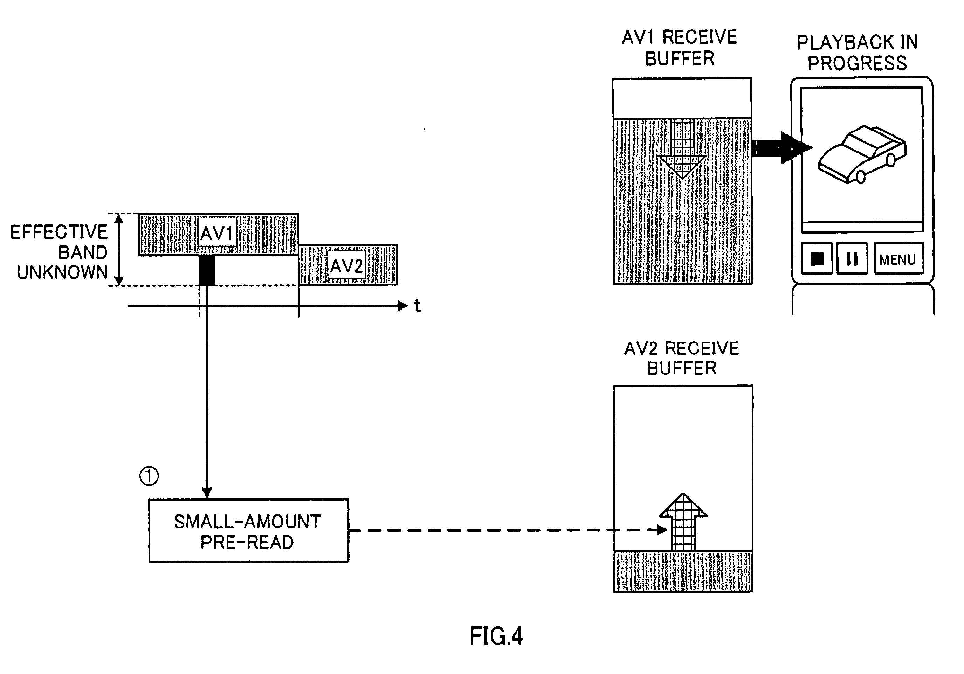

FIG.4 shows a state in which processing has progressed from the state in FIG.3B, small-amount pre-read processing of AV2 data to be played back next (①) is executed in accordance with the above-described pre-read schedule, and storage of AV2 data in the AV2 data receive buffer is started.

That is to say, the state shown in FIG.4 corresponds to the case where the processing flow has proceeded from step S201 to step S204 in the flowchart in FIG.2 described above.

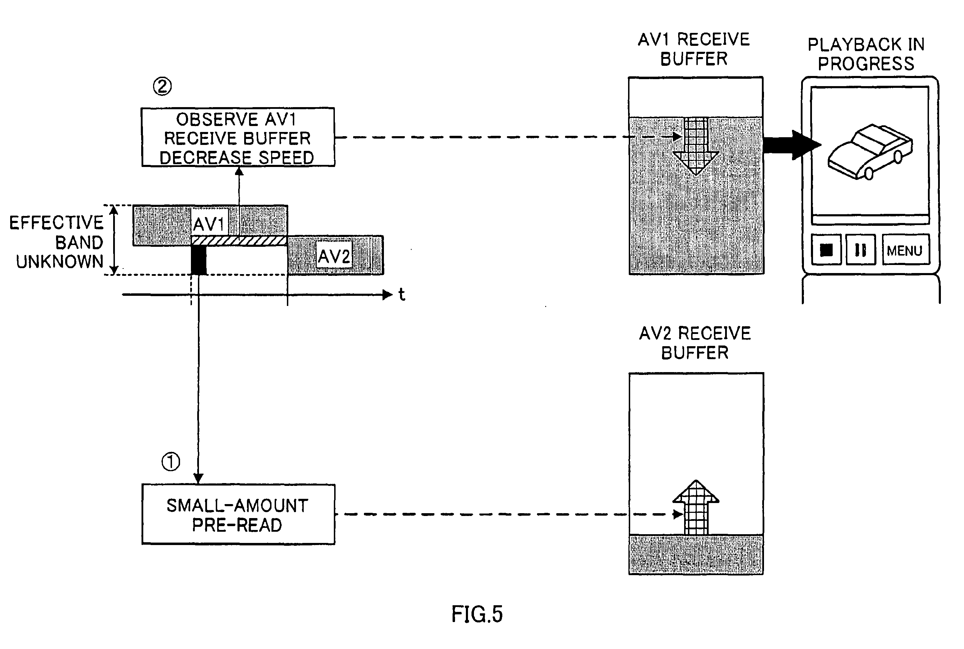

FIG.5 shows a state in which processing has further progressed from the state in FIG.4, and AV1 data receive buffer decrease speed observation processing (②) is executed.

That is to say, the state shown in FIG.5 corresponds to the case where the processing flow has further proceeded from step S204 to step S205 in the flowchart in FIG.2 described above.

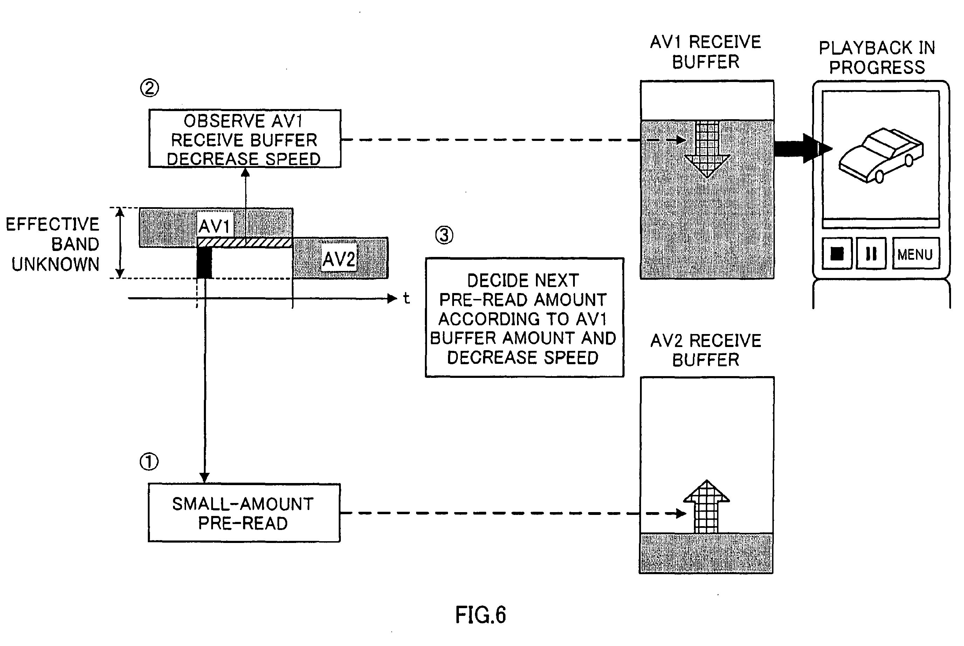

FIG. 6 shows a state in which processing has further progressed from the state in FIG.5, and as a result of the AV1 data receive buffer decrease speed observation processing, the next AV2 data pre-read amount is decided (③).

That is to say, the state shown in FIG. 6 corresponds to the case where the processing flow has further proceeded from step S205 to step S206 in the flowchart in FIG.2 described above.

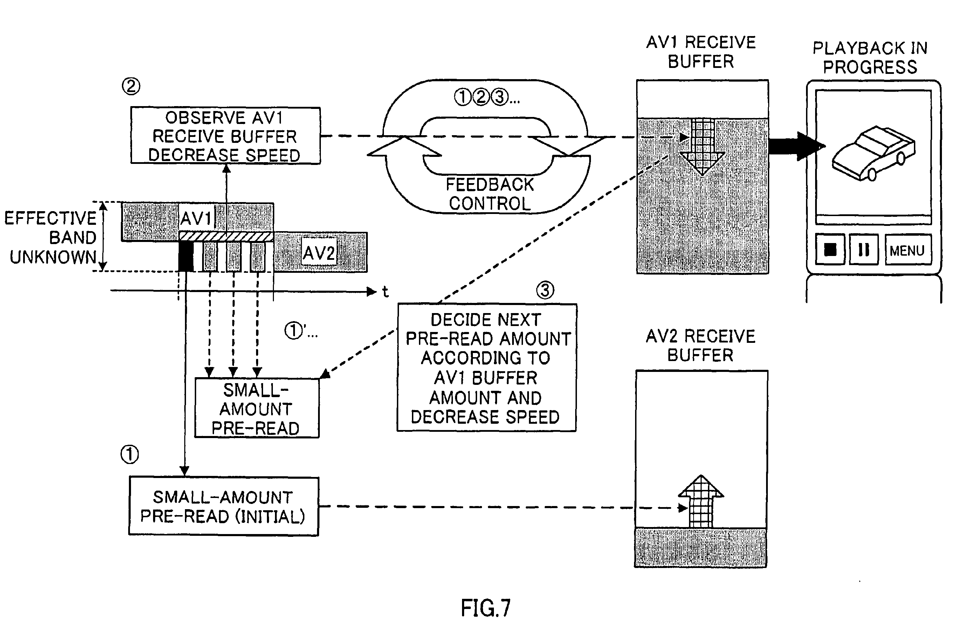

FIG.7 shows a state in which processing has further progressed from the state in FIG.6, the processing in FIG.4 through FIG.6 has been executed repeatedly, and each time a pre-read schedule has been decided, and AV2 data small-amount pre-read processing (①', ...) is executed repeatedly.

That is to say, the state shown in FIG.7 corresponds to the case where the processing in step S202 through step S206 in the flowchart in FIG.2 described above is executed repeatedly.

As described above, according to mobile phone apparatus 100 of this embodiment, when a streaming distribution service that includes a plurality of multimedia data is received from server 30, the pre-read schedule (pre-read amount, pre-read interval) for the data to be played back next is controlled dynamically according to the receive buffer decrease speed of the data being played back, so that pre-reading of the next media data can be performed to the fullest extent possible without degrading the playback quality of data being played back, and a plurality of data can be played back seamlessly.

Specifically, with regard to the bandwidth necessary for one AV streaming distribution, assuming, for example, AAC (Advanced Audio Coding) (32 kbps) for audio data, MPEG4 (Moving Picture Experts Group phase 4) for video data, and a transmission overhead factor of approximately 1.2, 115 kbps x 2 = 230 kbps is necessary to continue pre-reading during playback.

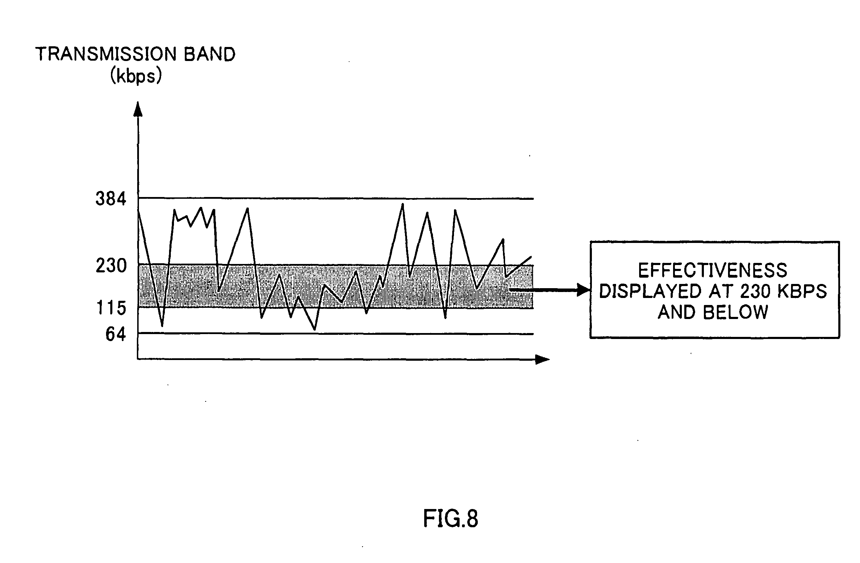

When distribution is performed by means of WCDMA (Wideband Code Division Multiple Access) with streaming as the network environment, WCDMA varies between 64 kbps and 384 kbps, but by applying the pre-read schedule control processing of this embodiment, it is possible to perform distribution at 230 kbps or less as shown in FIG.8.

Therefore, even in a case where streaming distribution is received via a transmission path whose bandwidth is not guaranteed, as with mobile phones, and a plurality of media data are played back sequentially, by applying the dynamic pre-read control function of the present invention, pre-reading of the next media data can be performed to the fullest extent possible without degrading the playback quality of data being played back, a plurality of multimedia data can be played back seamlessly, and streaming distribution service reliability can be improved.

In the above embodiment, receive buffer decrease speed has been taken as a criterion when controlling the pre-read schedule, but it is also possible to use another criterion, such as the degree of degradation of playback quality of media being playedback, for example, and decide the pre-read amount or pre-read interval for media to be played back second based on that criterion.

The degree of degradation of playback quality can be measured by means of the frequency of frame loss in the case of moving images, the frequency of skipping (dropout) in the case of audio, the frequency of decoding failure, and so forth.

It is also possible to decide the pre-read amount or pre-read interval for media to be played back second using network statistical information as a criterion for controlling the pre-read schedule.

Network statistical information can be estimated from the arrival delay time of packets received from a server, the packet loss rate, delay time fluctuation (jitter), or the like.

In the above embodiment, a mechanism has been described whereby data stored in a server is received and played back by a terminal in streaming distribution using a network, but the apparatus that stores data is not limited to a server and may be an external memory medium, internal memory, or the like; and the present invention can also be applied to a case where a terminal reads and receives data from an apparatus storing data and plays back that data, in order to perform to the fullest extent possible reception of data to be played back next without degrading the playback quality of data being played back, and play back a plurality of data seamlessly.

In the above embodiment, a receive buffer has been given a configuration whereby pre-decoding data is stored temporarily, but it is also possible to store post-decoding data temporarily, and control the pre-read amount and pre-read interval according to the speed of decrease of this buffer.

Also, the relationship between the pre-read amount and pre-read interval based on the receive buffer decrease speed may be other than as shown by patterns A and B in the above embodiment, and may be as shown below, for example.
- If the decrease speed is 0, the same pre-read amount and pre-read interval continue to be used.
- If decrease speed ≤ threshold value, the pre-read amount is decreased and the pre-read interval is increased.
- If decrease speed > threshold value, pre-reading is halted.

By executing such dynamic pre-read processing, it is possible to control appropriately the pre-read amount (reception amount) and pre-read interval (reception interval) of media data to be played back next without degrading the playback quality of media data being played back, based on the speed of decrease of the receive buffer storing media data being played back, and to play back consecutive media data seamlessly.

In the above embodiment, a case has been described in which there is one server 30 that distributes playback scenarios and media data, but a configuration is also possible whereby a server that distributes playback scenarios and a server that distributes media data are separate, and a configuration is also possible whereby a plurality of media data specified in a playback scenario are distributed by separate servers.

As described above, according to the present invention, reception operation of second data to be played back next is adjusted during playback of first data, enabling second data reception operation to be executed to the fullest extent possible without degrading the playback quality of first data being played back, and enabling a plurality of data to be played back seamlessly.

When the preset second data reception amount is adjusted based on the playback or reception state of first data at this time, the second data reception amount can be set to a maximum without degrading the playback quality of first data being played back, and a plurality of data can be played back seamlessly.

Also, when the preset second data reception amount reception interval is adjusted based on the playback or reception state of first data, the second data reception amount can be set to a maximum without degrading the playback quality of first data being played back, and a plurality of data can be played back seamlessly.

In the above description, a first storage section that stores first data and a second storage section that stores second data are provided, and also in a case where the second data reception amount and/or reception interval is adjusted based on the speed of decrease due to playback of first data stored in the storage section, the second data reception amount can be set to a maximum without degrading the playback quality of first data being played back, and a plurality of data can be played back seamlessly.

At this time, if the second data reception amount is increased and/or the reception interval is reduced when the speed of decrease due to first data playback is 0 or less, the second data reception amount can be increased as appropriate without degrading the playback quality of first data being played back.

Also, if the second data reception amount and/or reception interval is not changed when the speed of decrease due to first data playback is 0 or less, the second data reception amount can be maintained as appropriate without degrading the playback quality of first data being played back.

Also, if the second data reception amount and/or reception interval is not changed when the speed of decrease of first data is less than or equal to an arbitrary threshold value, the second data reception amount can be maintained as appropriate without degrading the playback quality of first data being played back.

Also, if the second data reception amount is increased and/or the reception interval is reduced when the speed of decrease of first data is less than or equal to an arbitrary threshold value, the second data reception amount can be increased as appropriate without degrading the playback quality of first data being played back.

Also, if the second data reception amount is increased and/or the reception interval is extended when the speed of decrease of first data is greater than an arbitrary threshold value, the second data reception amount can be decreased as appropriate without degrading the playback quality of first data being played back.

Also, if reception of second data is halted when the speed of decrease of first data is greater than an arbitrary threshold value, second data reception operation that affects playback of first data being played back can be discontinued as appropriate.

Also, in a case also in which reception of second data is halted when, based on the speed of decrease of first data, the minimum capacity of the first storage section necessary to continue playback of that first data normally is determined, and it is determined that the capacity has fallen to or below the minimum capacity, second data reception operation that affects playback of first data being played back can be discontinued as appropriate.

In the above description, when the playback quality of first data is measured, and the reception amount and/or reception interval of second data is adjusted based on the measured first data playback quality, the second data reception amount can be adjusted as appropriate without degrading the playback quality of first data being played back.

At this time, if the second data reception amount is increased and/or the reception interval is reduced when there is no degradation of first data playback quality, the second data reception amount can be increased as appropriate without degrading the playback quality of first data being played back.

Also, if the second data reception amount and/or reception interval is not changed when there is no degradation of first data playback quality, the second data reception amount can be maintained as appropriate without degrading the playback quality of first data being played back.

Also, if the second data reception amount and/or reception interval is not changed when the degree of degradation of first data playback quality is less than or equal to an arbitrary threshold value, the second data reception amount can be maintained as appropriate without degrading the playback quality of first data being played back.

Also, if the second data reception amount is increased and/or the reception interval is reduced when the degree of degradation of first data playback quality is less than or equal to an arbitrary threshold value, the second data reception amount can be increased as appropriate without degrading the playback quality of first data being played back.

Also, if the second data reception amount is decreased and/or the reception interval is extended when the degree of degradation of first data playback quality is greater than an arbitrary threshold value, the second data reception amount can be decreased as appropriate without degrading the playback quality of first data being played back.

Also, in a case also in which reception of second data is halted when the degree of degradation of first data playback quality is greater than an arbitrary threshold value, second data reception operation that affects the playback quality of first data being played back can be discontinued as appropriate.

## Claims

1. A data reception and playback apparatus adapted to receive data stored in one of a server (30) and a data storage apparatus via a communication medium (10, 20) and to play back said data, comprising a receiving section (103) for receiving data and a measuring section (107) for measuring the playback or reception state of the data being played back
**characterized by**:
a first storage section (108) adapted to store first multimedia data of a first multimedia streaming distribution;
a second storage section (108) adapted to store second multimedia data of a second multimedia streaming distribution to be played back later than playback of the first multimedia data;
said receiving section (103) being adapted to receive the first multimedia data and to receive the second multimedia data from said server (30) or said data storage apparatus during playback of the first multimedia data;
said measuring section (107) being adapted to measure a playback or reception state of the first multimedia data being played back; and
an adjusting section (106) adapted to adjust reception operation of the second multimedia data in said receiving section (103) based on the playback or reception state of the first multimedia data measured by said measuring section (107).

2. The data reception and playback apparatus according to claim 1, wherein said adjusting section (106) is further adapted to set a reception amount of the second multimedia data in said receiving section (103) to an arbitrary amount, and to adjust the set reception amount based on the measured playback or reception state of the first multimedia data.

3. The data reception and playback apparatus according to claim 1, wherein said adjusting section (106) is further adapted to set a reception amount of the second multimedia data in said receiving section (103) to an arbitrary amount, and to adjust an interval at which the second multimedia data is received in the arbitrary amount based on the measured playback or reception state of the first multimedia data.

4. The data reception and playback apparatus according to any one of claims 1-3, wherein:
said measuring section (107), when the first multimedia data is read from said first storage section (108) and played back, is further adapted to measure a speed of decrease of the first multimedia data stored in said first storage section (108); and
said adjusting section (106) is further adapted to adjust a reception amount and/or reception interval of the second multimedia data based on the measured speed of decrease of the first multimedia data measured by said measuring section (107).

5. The data reception and playback apparatus according to claim 4, wherein said adjusting section (106) is further adapted to increase the reception amount and/or to reduce the reception interval of the second multimedia data when the speed of decrease of the first multimedia data measured by said measuring section (107) is less than or equal to 0.

6. The data reception and playback apparatus according to claim 4, wherein said adjusting section (106) is further adapted to not change the reception amount and/or reception interval of the second multimedia data when the speed of decrease of the first multimedia data measured by said measuring section (107) is less than or equal to 0.

7. The data reception and playback apparatus according to claim 4, wherein said adjusting section (106) is further adapted to not change the reception amount and/or reception interval of the second multimedia data when the speed of decrease of the first multimedia data measured by said measuring section (107) is less than or equal to an arbitrary threshold value.

8. The data reception and playback apparatus according to claim 4, wherein said adjusting section (106) is further adapted to increase the reception amount and/or to reduce the reception interval of the second multimedia data when the speed of decrease of the first multimedia data measured by said measuring section (107) is less than or equal to an arbitrary threshold value.

9. The data reception and playback apparatus according to claim 4, wherein said adjusting section (106) is further adapted to decrease the reception amount and/or to extend the reception interval of the second multimedia data when the speed of decrease of the first multimedia data measured by said measuring section (107) is greater than an arbitrary threshold value.

10. The data reception and playback apparatus according to claim 4, wherein said adjusting section (106) is further adapted to halt reception of the second multimedia data when the speed of decrease of the first multimedia data measured by said measuring section (107) is greater than an arbitrary threshold value.

11. The data reception and playback apparatus according to claim 4, wherein said adjusting section (106), based on the speed of decrease of the first multimedia data measured by said measuring section (107), is further adapted to determine a minimum capacity of said first storage section (108) necessary to continue playback of the first multimedia data normally, and in the event of determining that the minimum capacity or less has been reached, to halt reception of the second multimedia data.

12. The data reception and playback apparatus according to any one of claims 1-3, wherein
said measuring section (107) is further adapted to measure playback quality of the first multimedia data; and
said adjusting section (106) is further adapted to adjust a reception amount and/or reception interval of the second multimedia data based on the playback quality of the first multimedia data measured by said measuring section (107).

13. The data reception and playback apparatus according to claim 12, wherein said adjusting section (106) is further adapted to increase the reception amount and/or to reduce the reception interval of the second multimedia data when there is no degradation of the playback quality of the first multimedia data measured by said measuring section (107).

14. The data reception and playback apparatus according to claim 12, wherein said adjusting section (106) is further adapted to not change the reception amount and/or reception interval of the second multimedia data when there is no degradation of the playback quality of the first multimedia data measured by said measuring section (107).

15. The data reception and playback apparatus according to claim 12, wherein said adjusting section (106) is further adapted to not change the reception amount and/or reception interval of the second multimedia data when a degree of degradation of the playback quality of the first multimedia data measured by said measuring section (107) is less than or equal to an arbitrary threshold value.

16. The data reception and playback apparatus according to claim 12, wherein said adjusting section (106) is further adapted to increase the reception amount and/or to reduce the reception interval of the second multimedia data when a degree of degradation of the playback quality of the first multimedia data measured by said measuring section (107) is less than or equal to an arbitrary threshold value.

17. The data reception and playback apparatus according to claim 12, wherein said adjusting section (106) is further adapted to decrease the reception amount and/or to extend the reception interval of the second multimedia data when a degree of degradation of the playback quality of the first multimedia data measured by said measuring section (107) is greater than an arbitrary threshold value.

18. The data reception and playback apparatus according to claim 12, wherein said adjusting section (106) is further adapted to halt reception of the second multimedia data when a degree of degradation of the playback quality of the first multimedia data measured by said measuring section (107) is greater than an arbitrary threshold value.

19. A data reception and playback method for receiving data stored in a server or a data storage apparatus via a communication medium (10, 20) and for playing back the data, comprising the steps of:
receiving first multimedia data for a first multimedia streaming distribution and storing the first multimedia data in a first storage section, and receiving second multimedia data of a second multimedia streaming distribution to be played back later than playback of the first multimedia data from said server (30) or data storage apparatus and storing the second multimedia data in a second storage section during playback of the first multimedia data;
measuring a playback or reception state of the first multimedia data being played back; and
adjusting reception operation of the second multimedia data based on the measured playback or reception state of the first multimedia data.

20. A data reception and playback processing program for performing reception and playback processing of data in a data reception and playback apparatus adapted to receive the data stored in a server (30) or a data storage apparatus via a communication medium (10, 20) and plays back the data, said data reception and playback processing program, comprising the steps of:
receiving first multimedia data for a first multimedia streaming distribution and storing the first multimedia data in a first storage section, and receiving second multimedia data of a second multimedia streaming distribution to be played back later than playback of the first multimedia data from said server (30) or data storage apparatus and storing the second multimedia data in a second storage section during playback of the first multimedia data;
measuring a playback or reception state of the first multimedia data being played back; and
adjusting reception operation of the second multimedia data based on the measured playback or reception state of the first multimedia data.

## Patentansprüche

1. Vorrichtung zum Empfangen und Wiedergeben von Daten, die zum Empfangen von Daten, die in einem Server (30) oder einer Datenspeichervorrichtung gespeichert sind, über ein Kommunikationsmedium (20) und zum Wiedergeben der Daten eingerichtet ist, wobei sie einen Empfangsabschnitt (103) zum Empfangen von Daten und einen Messabschnitt (107) zum Messen des Wiedergabe- oder Empfangszustandes der Daten umfasst, die wiedergegeben werden,
**gekennzeichnet durch**:
einen ersten Speicherabschnitt (108), der zum Speichern erster Multimedia-Daten einer ersten Multimedia-Streaming-Verteilung eingerichtet ist;
einen zweiten Speicherabschnitt (108), der zum Speichern zweiter Multimedia-Daten einer zweiten Multimedia-Streaming-Verteilung zum Abspielen nach dem Abspielen der ersten Multimedia-Daten eingerichtet ist;
wobei der Empfangsabschnitt (103) zum Empfangen der ersten Multimedia-Daten und zum Empfangen der zweiten Multimedia-Daten von dem Server (30) oder der Datenspeichervorrichtung während der Wiedergabe der ersten Multimedia-Daten eingerichtet ist;
der Messabschnitt (107) zum Messen eines Wiedergabe- oder Empfangszustandes der ersten Multimedia-Daten eingerichtet ist, die abgespielt werden; und
einen Regulierabschnitt (106), der zum Regulieren des Empfangsvorgangs der zweiten Multimediadaten in dem Empfangsabschnitt (103) auf Basis des Wiedergabe- oder Empfangszustandes der ersten Multimedia-Daten eingerichtet ist, der durch den Messabschnitt (107) gemessen wird.

2. Vorrichtung zum Empfangen und Wiedergeben von Daten nach Anspruch 1, wobei der Regulierabschnitt (106) des Weiteren so eingerichtet ist, dass er eine Empfangsgröße der zweiten Multimedia-Daten in dem Empfangsabschnitt (103) auf eine beliebige Größe einstellt und die eingestellte Empfangsgröße auf Basis des gemessenen Wiedergabe- oder Empfangszustandes der ersten Multimedia-Daten reguliert.

3. Vorrichtung zum Empfangen und Wiedergeben von Daten nach Anspruch 1, wobei der Regulierabschnitt (106) des Weiteren so eingerichtet ist, dass er eine Empfangsgröße der zweiten Multimedia-Daten in dem Empfangsabschnitt (103) auf eine beliebige Größe einstellt und ein Intervall, in dem die zweiten Multimediadaten in der beliebigen Größe empfangen werden, auf Basis des gemessenen Wiedergabe- oder Empfangszustandes der ersten Multimedia-Daten reguliert.

4. Vorrichtung zum Empfangen und Wiedergeben von Daten nach einem der Ansprüche 1 bis 3, wobei:
der Messabschnitt (107) des Weiteren so eingerichtet ist, dass er, wenn die ersten Multimedia-Daten aus dem ersten Speicherabschnitt (108) gelesen und wiedergegeben werden, eine Geschwindigkeit der Verringerung der in dem ersten Speicherabschnitt (108) gespeicherten Multimedia-Daten misst; und
der Regulierabschnitt (106) des Weiteren so eingerichtet ist, dass er eine Empfangsgröße und/oder ein Empfangsintervall der zweiten Multimedia-Daten auf Basis der durch den Messabschnitt (107) gemessenen Geschwindigkeit der Verringerung der ersten Multimedia-Daten reguliert.

5. Vorrichtung zum Empfangen und Wiedergeben von Daten nach Anspruch 4, wobei der Regulierabschnitt (106) des Weiteren so eingerichtet ist, dass er die Empfangsgröße der zweiten Multimedia-Daten erhöht und/oder ihr Empfangsintervall reduziert, wenn die durch den Messabschnitt (107) gemessene Geschwindigkeit der Verringerung der ersten Multimedia-Daten kleiner als 0 oder gleich 0 ist.

6. Vorrichtung zum Empfangen und Wiedergeben von Daten nach Anspruch 4, wobei der Regulierabschnitt (106) des Weiteren so eingerichtet ist, dass er die Empfangsgröße und/oder das Empfangsintervall der zweiten Multimedia-Daten nicht ändert, wenn die durch den Messabschnitt (107) gemessene Geschwindigkeit der Verringerung der ersten Multimedia-Daten kleiner als 0 oder gleich 0 ist.

7. Vorrichtung zum Empfangen und Wiedergeben von Daten nach Anspruch 4, wobei der Regulierabschnitt (106) des Weiteren so eingerichtet ist, dass er die Empfangsgröße und/oder das Empfangsintervall der zweiten Multimedia-Daten nicht ändert, wenn die durch den Messabschnitt (107) gemessene Geschwindigkeit der Verringerung der ersten Multimedia-Daten kleiner ist als oder genauso groß wie ein beliebiger Schwellenwert.

8. Vorrichtung zum Empfangen und Wiedergeben von Daten nach Anspruch 4, wobei der Regulierabschnitt (106) des Weiteren so eingerichtet ist, dass er die Empfangsgröße der zweiten Multimediadaten erhöht und/oder ihr Empfangsintervall reduziert, wenn die durch den Messabschnitt (107) gemessene Geschwindigkeit der Verringerung der ersten Multimedia-Daten kleiner ist als oder genauso groß wie ein beliebiger Schwellenwert.

9. Vorrichtung zum Empfangen und Wiedergeben von Daten nach Anspruch 4, wobei der Regulierabschnitt (106) des Weiteren so eingerichtet ist, dass er die Empfangsgröße der zweiten Multimedia-Daten verringert und/oder ihr Empfangsintervall verlängert, wenn die durch den Messabschnitt (107) gemessene Geschwindigkeit der Verringerung der ersten Multimedia-Daten größer ist als ein beliebiger Schwellenwert.

10. Vorrichtung zum Empfangen und Wiedergeben von Daten nach Anspruch 4, wobei der Regulierabschnitt (106) des Weiteren so eingerichtet ist, dass er den Empfang der zweiten Multimedia-Daten unterbricht, wenn die durch den Messabschnitt (107) gemessene Geschwindigkeit der Verringerung der ersten Multimedia-Daten größer ist als ein beliebiger Schwellenwert.

11. Vorrichtung zum Empfangen und Wiedergeben von Daten nach Anspruch 4, wobei der Regulierabschnitt (106) des Weiteren so eingerichtet ist, dass er auf Basis der durch den Messabschnitt (107) gemessenen Geschwindigkeit der Verringerung der ersten Multimedia-Daten eine minimale Kapazität des ersten Speicherabschnitts (108) feststellt, die erforderlich ist, um Wiedergabe der ersten Multimedia-Daten normal fortzusetzen, und wenn festgestellt wird, dass die minimale oder eine darunter liegende Kapazität erreicht worden ist, Empfang der zweiten Multimedia-Daten unterbricht.

12. Vorrichtung zum Empfangen und Wiedergeben von Daten nach einem der Ansprüche 1-3, wobei
der Messabschnitt (107) des Weiteren so eingerichtet ist, dass er Wiedergabequalität der ersten Multimedia-Daten misst; und
der Regulierabschnitt (106) des Weiteren so eingerichtet ist, dass er eine Empfangsgröße und/oder ein Empfangsintervall der zweiten Multimedia-Daten auf Basis der durch den Messabschnitt (107) gemessenen Wiedergabequalität der ersten Multimedia-Daten reguliert.

13. Vorrichtung zum Empfangen und Wiedergeben von Daten nach Anspruch 12, wobei der Regulierabschnitt (106) des Weiteren so eingerichtet ist, dass er die Empfangsgröße der zweiten Multimedia-Daten erhöht und/oder ihr Empfangsintervall reduziert, wenn keine Verschlechterung der durch den Messabschnitt (107) gemessenen Wiedergabequalität der ersten Multimedia-Daten vorliegt.

14. Vorrichtung zum Empfangen und Wiedergeben von Daten nach Anspruch 12, wobei der Regulierabschnitt (106) des Weiteren so eingerichtet ist, dass er die Empfangsgröße und/oder das Empfangsintervall der zweiten Multimediadaten nicht ändert, wenn keine Verschlechterung der durch den Messabschnitt (107) gemessenen Wiedergabequalität der ersten Multimedia-Daten vorliegt.

15. Vorrichtung zum Empfangen und Wiedergeben von Daten nach Anspruch 12, wobei der Regulierabschnitt (106) des Weiteren so eingerichtet ist, dass er die Empfangsgröße und/oder das Empfangsintervall der zweiten Multimedia-Daten nicht ändert, wenn ein Grad der Verschlechterung der durch den Messabschnitt (107) gemessenen Wiedergabequalität der ersten Multimedia-Daten kleiner ist als oder genauso groß wie ein beliebiger Schwellenwert.

16. Vorrichtung zum Empfangen und Wiedergeben von Daten nach Anspruch 12, wobei der Regulierabschnitt (106) des Weiteren so eingerichtet ist, dass er die Wiedergabegröße der zweiten Multimedia-Daten erhöht und/oder ihr Empfangsintervall reduziert, wenn ein Grad der Verschlechterung der durch den Messabschnitt (107) gemessenen Wiedergabequalität der ersten Multimedia-Daten kleiner ist als oder genauso groß wie ein beliebiger Schwellenwert.

17. Vorrichtung zum Empfangen und Wiedergeben von Daten nach Anspruch 12, wobei der Regulierabschnitt (106) des Weiteren so eingerichtet ist, dass er die Empfangsgröße der zweiten Multimedia-Daten verringert und/oder ihr Empfangsintervall verlängert, wenn ein Grad der Verschlechterung der durch den Messabschnitt (107) gemessenen Wiedergabequalität der ersten Multimedia-Daten größer ist als ein beliebiger Schwellenwert.

18. Vorrichtung zum Empfangen und Wiedergeben von Daten nach Anspruch 12, wobei der Regulierabschnitt (106) des Weiteren so eingerichtet ist, dass er den Empfang der zweiten Multimedia-Daten unterbricht, wenn ein Grad der Verschlechterung der durch den Messabschnitt (107) gemessenen Wiedergabequalität der ersten Multimedia-Daten größer ist als ein beliebiger Schwellenwert.

19. Daten-Empfangs-und-Wiedergabeverfahren zum Empfangen von in einem Server oder einer Datenspeichervorrichtung gespeicherten Daten über ein Kommunikationsmedium (10, 20) und zum Wiedergeben der Daten, wobei es die folgenden Schritte umfasst:
Empfangen erster Multimedia-Daten für eine erste Multimedia-Streaming-Verteilung und Speichern der ersten Multimedia-Daten in einem ersten Speicherabschnitt und Empfangen zweiter Multimedia-Daten einer zweiten Multimedia-Streaming-Verteilung zur Wiedergabe nach der Wiedergabe der ersten Multimedia-Daten von dem Server (30) oder der Datenspeichervorrichtung und Speichern der zweiten Multimedia-Daten in einem zweiten Speicherabschnitt während der Wiedergabe der ersten Multimedia-Daten;
Messen eines Wiedergabe- oder Empfangs-Zustandes der ersten Multimedia-Daten, die wiedergegeben werden; und
Regulieren von Empfangsbetrieb der zweiten Multimedia-Daten auf Basis des gemessenen Wiedergabe- oder Empfangszustandes der ersten Multimedia-Daten.

20. Daten-Empfangs-und-Wiedergabe-Verarbeitungsprogramm zum Durchführen von Empfangs-und-Wiedergabeverarbeitung von Daten in einer Vorrichtung zum Empfangen und Wiedergeben von Daten, die zum Empfangen der in einem Server (30) oder einer Datenspeichervorrichtung gespeicherten Daten über ein Kommunikationsmedium (10, 20) eingerichtet ist und die Daten wiedergibt, wobei das Daten-Empfangs-und-Wiedergabe-Verarbeitungsprogramm die folgenden Schritte umfasst:
Empfangen erster Multimedia-Daten für eine erste Multimedia-Streaming-Verteilung und Speichern der ersten Multimedia-Daten in einem ersten Speicherabschnitt und Empfangen zweiter Multimedia-Daten einer zweiten Multimedia-Streaming-Verteilung zur Wiedergabe nach der Wiedergabe der ersten Multimedia-Daten von dem Server (30) oder der Datenspeichervorrichtung und Speichern der zweiten Multimedia-Daten in einem zweiten Speicherabschnitt während der Wiedergabe der ersten Multimedia-Daten.
Messen eines Wiedergabe- oder Empfangszustandes der ersten Multimedia-Daten, die wiedergegeben werden; und
Regulieren von Empfangsbetrieb der zweiten Multimedia-Daten auf Basis des gemessenen Wiedergabe- oder Empfangszustandes der ersten Multimedia-Daten.

## Revendications

1. Appareil de réception et reproduction de données adapté pour recevoir des données stockées dans l'un d'un serveur (30) et d'un appareil de stockage de données en passant par un support de communication (10, 20) et pour reproduire lesdites données, comprenant une partie (103) de réception pour recevoir des données et une partie (107) de mesure pour mesurer l'état de reproduction ou de réception des données qui sont en train d'être reproduites
**caractérisé par** :
une première partie (108) de stockage adaptée pour stocker des premières données multimédia d'une première distribution de diffusion multimédia ;
une seconde partie (108) de stockage pour stocker des secondes données multimédia d'une seconde distribution de diffusion multimédia qui doivent être reproduites plus tard que la reproduction des premières données multimédia ;
ladite partie (103) de réception étant adaptée pour recevoir les premières données multimédia et pour recevoir les secondes données multimédia en provenance dudit serveur (30) ou dudit appareil de stockage de données pendant la reproduction des premières données multimédia ;
ladite partie (107) de mesure étant adaptée pour mesurer un état de reproduction ou de réception des premières données multimédia qui sont en train d'être reproduites; et
une partie d'ajustage (106) adaptée pour ajuster l'opération de la réception des secondes données multimédia dans ladite partie (103) de réception en se basant sur l'état de reproduction ou de réception des premières données multimédia mesuré par ladite partie (107) de mesure.

2. Appareil de réception et reproduction de données selon la revendication 1, dans lequel ladite partie (106) d'ajustage est en plus adaptée pour fixer une quantité de réception des secondes données multimédia dans ladite partie (103) de réception à une quantité arbitraire, et pour ajuster la quantité de réception fixée en se basant sur l'état mesuré de reproduction ou de réception des premières données multimédia.

3. Appareil de réception et reproduction de données selon la revendication 1, dans lequel ladite partie d'ajustage (106) est en plus adaptée pour fixer une quantité de réception des secondes données multimédia dans ladite partie (103) de réception à une quantité arbitraire, et pour ajuster un intervalle auquel les secondes données multimédia sont reçues dans la quantité arbitraire en se basant sur l'état mesuré de reproduction ou de réception des premières données multimédia.

4. Appareil de réception et reproduction de données selon l'une quelconque des revendications 1 à 3, dans lequel :
ladite partie (107) de mesure, lorsque les premières données multimédia sont lues en provenance de ladite première partie (108) de stockage et reproduites, est en plus adaptée pour mesurer une vitesse de réduction des premières données multimédia stockées par ladite première partie (108) de stockage ; et
ladite partie (106) d'ajustage est en plus adaptée pour ajuster une quantité de réception et/ou un intervalle de réception des secondes données multimédia en se basant sur la vitesse mesurée de réduction des premières données multimédia mesurée par ladite partie (107) de mesure.

5. Appareil de réception et reproduction de données selon la revendication 4, dans lequel ladite partie (106) d'ajustage est en plus adaptée pour augmenter la quantité de réception et/ou pour réduire l'intervalle de réception des secondes données multimédia lorsque la vitesse de réduction des premières données multimédia mesurée par ladite partie (107) de mesure est inférieure ou égale à 0.

6. Appareil de réception et reproduction de données selon la revendication 4, dans lequel ladite partie (106) d'ajustage est en plus adaptée pour ne pas changer la quantité de réception et/ou l'intervalle de réception des secondes données multimédia lorsque la vitesse de réduction des premières données multimédia mesurée par ladite partie (107) de mesure est inférieure ou égale à 0.

7. Appareil de réception et reproduction de données selon la revendication 4, dans lequel ladite partie (106) d'ajustage est en plus adaptée pour ne pas changer la quantité de réception et/ou l'intervalle de réception des secondes données multimédia lorsque la vitesse de réduction des premières données multimédia mesurée par ladite partie (107) de mesure est inférieure ou égale à une valeur de seuil arbitraire.

8. Appareil de réception et reproduction de données selon la revendication 4, dans lequel ladite partie (106) d'ajustage est en plus adaptée pour augmenter la quantité de réception et/ou pour réduire l'intervalle de réception des secondes données multimédia lorsque la vitesse de réduction des premières données multimédia mesurée par ladite partie (107) de mesure est inférieure ou égale à une valeur de seuil arbitraire.

9. Appareil de réception et reproduction de données selon la revendication 4, dans lequel ladite partie (106) d'ajustage est en plus adaptée pour réduire la quantité de réception et/ou pour étendre l'intervalle de réception des secondes données multimédia lorsque la vitesse de réduction des premières données multimédia mesurée par ladite partie (107) de mesure est supérieure à une valeur de seuil arbitraire.

10. Appareil de réception et reproduction de données selon la revendication 4, dans lequel ladite partie (106) d'ajustage est en plus adaptée pour suspendre la réception des secondes données multimédia lorsque la vitesse de réduction des premières données multimédia mesurée par ladite partie (107) de mesure est supérieure à une valeur de seuil arbitraire.

11. Appareil de réception et reproduction de données selon la revendication 4, dans lequel ladite partie (106) d'ajustage, en se basant sur la vitesse de réduction des premières données multimédia mesurée par la dite partie (107) de mesure, est en plus adaptée pour déterminer une capacité minimum de ladite première partie (108) de stockage nécessaire pour continuer la reproduction des premières données multimédia de manière normale, et dans le cas où il est déterminé que la capacité minimum ou moins a été atteinte, pour suspendre la réception des secondes données multimédia.

12. Appareil de réception et reproduction de données selon l'une quelconque des revendications 1 à 3, dans lequel :
ladite partie (107) de mesure est en plus adaptée pour mesurer la qualité de reproduction des premières données multimédia, et
ladite partie (106) d'ajustage est en plus adaptée pour ajuster une quantité de réception et/ou un intervalle de réception des secondes données multimédia en se basant sur la qualité de reproduction des premières données multimédia mesurée par ladite partie (107) de mesure.

13. Appareil de réception et reproduction de données selon la revendication 12, dans lequel ladite partie (106) d'ajustage est en plus adaptée pour augmenter la quantité de réception et/ou pour réduire l'intervalle de réception des secondes données multimédia lorsqu'il n'y a pas de dégradation de la qualité de reproduction des premières données multimédia mesurée par ladite partie (107) de mesure.

14. Appareil de réception et reproduction de données selon la revendication 12, dans lequel ladite partie (106) d'ajustage est en plus adaptée pour ne pas changer la quantité de réception et/ou l'intervalle de réception des secondes données multimédia lorsqu'il n'y a pas de dégradation de la qualité de reproduction des premières données multimédia mesurée par ladite partie (107) de mesure.

15. Appareil de réception et reproduction de données selon la revendication 12, dans lequel ladite partie (106) d'ajustage est en plus adaptée pour ne pas changer la quantité de réception et/ou l'intervalle de réception des secondes données multimédia lorsqu'un degré de dégradation de la qualité de reproduction des premières données multimédia mesuré par ladite partie (107) de mesure est inférieur ou égal à une valeur de seuil arbitraire.

16. Appareil de réception et reproduction de données selon la revendication 12, dans lequel ladite partie (106) d'ajustage est en plus adaptée pour augmenter la quantité de réception et/ou pour réduire l'intervalle de réception des secondes données multimédia lorsqu'un degré de dégradation de la qualité de reproduction des premières données multimédia mesuré par ladite partie (107) de mesure est inférieur ou égal à une valeur de seuil arbitraire.

17. Appareil de réception et reproduction de données selon la revendication 12, dans lequel ladite partie (106) d'ajustage est en plus adaptée pour diminuer la quantité de réception et/ou pour étendre l'intervalle de réception des secondes données multimédia lorsqu'un degré de dégradation de la qualité de reproduction des premières données multimédia mesuré par ladite partie (107) de mesure est supérieur à une valeur de seuil arbitraire.

18. Appareil de réception et reproduction de données selon la revendication 12, dans lequel ladite partie (106) d'ajustage est en plus adaptée pour suspendre la réception des secondes données multimédia lorsqu'un degré de dégradation de la qualité de reproduction des premières données multimédia mesuré par ladite partie (107) de mesure est supérieur à une valeur de seuil arbitraire.

19. Procédé de réception et reproduction de données pour recevoir des données stockées dans un serveur ou un appareil de stockage de données en passant par un support de communication (10, 20), et pour reproduire les données, comprenant les étapes consistant à :
recevoir des premières données multimédia pour une première distribution de diffusion multimédia et stocker les premières données multimédia dans une première partie de stockage, et recevoir des secondes données multimédia d'une seconde distribution de diffusion multimédia qui doivent être reproduites plus tard que la reproduction des premières données multimédia en provenance dudit serveur (30) ou de l'appareil de stockage de données, et stocker les secondes données multimédia dans une seconde partie de stockage pendant la reproduction des premières données multimédia ;
mesurer un état de reproduction ou de réception des premières données multimédia qui sont en train d'être reproduites ; et
ajuster l'opération de réception des secondes données multimédia en se basant sur l'état mesuré de reproduction ou de réception des premières données multimédia.

20. Logiciel de réception et reproduction de données pour exécuter un traitement de réception et de reproduction de données dans un appareil de réception et reproduction adapté pour recevoir les données stockées dans un serveur (30) ou un appareil de stockage de données en passant par un support de communication (10, 20), et pour reproduire les données, ledit logiciel de réception et reproduction de données comprenant les étapes consistant à :
recevoir des premières données multimédia pour une première distribution de diffusion multimédia et stocker les premières données multimédia dans une première partie de stockage, et recevoir des secondes données multimédia d'une seconde distribution de diffusion multimédia qui doivent être reproduites plus tard que la reproduction des premières données multimédia en provenance dudit serveur (30) ou de l'appareil de stockage de données, et stocker les secondes données multimédia dans une seconde partie de stockage pendant la reproduction des premières données multimédia ;
mesurer un état de reproduction ou de réception des premières données multimédia qui sont en train d'être reproduites; et
ajuster l'opération de réception des secondes données multimédia en se basant sur l'état mesuré de reproduction ou de réception des premières données multimédia.
